Europäisches Patentamt

European Patent Office

Office européen des brevets

(11) Veröffentlichungsnummer: **0 225 557 B1**

# (12) EUROPÄISCHE PATENTSCHRIFT

(45) Veröffentlichungstag der Patentschrift: **20.03.91**

(51) Int. Cl.⁵: **B60Q 1/30, B60Q 1/26,** F21Q 1/00

(21) Anmeldenummer: **86116553.8**

(22) Anmeldetag: **28.11.86**

(54) **Warnlichtgerät, insbesondere für Kraftfahrzeuge.**

(30) Priorität: **04.12.85 DE 3542842**

(43) Veröffentlichungstag der Anmeldung:
**16.06.87 Patentblatt 87/25**

(45) Bekanntmachung des Hinweises auf die
Patenterteilung:
**20.03.91 Patentblatt 91/12**

(84) Benannte Vertragsstaaten:
**AT BE CH DE FR GB IT LI LU NL**

(56) Entgegenhaltungen:
DE-B- 1 092 500
DE-U- 1 697 087
DE-U- 7 319 522

(73) Patentinhaber: **Böse, Herbert**
**Am Dachsbau 9**
**W-6232 Bad Soden 2(DE)**

(72) Erfinder: **Böse, Herbert**
**Am Dachsbau 9**
**W-6232 Bad Soden 2(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**W-6450 Hanau 7(DE)**

## Beschreibung

Die Erfindung betrifft ein Warnlichtgerät für insbesondere Kraftfahrzeuge, bestehend aus einem Kunststoffgehäuse mit Gehäuseaussteifungselementen und mehreren in Reihe nebeneinander im Gehäuse angeordneten Lampen.

Warnlichtgeräte sind bspw. nach der DE-PS 835 999 und dem DE-GM 85 10 959 bekannt. Derartige Geräte dienen dazu, in allen Verkehrsbereichen auf bestehende Gefahren gleich welcher Art besonders aufmerksam zu machen, seien es Unfallstellen, Baustellen, haltende Fahrzeuge oder Bereiche, in denen bspw. die Feuerwehr mit Löscharbeiten od. dgl. befaßt ist. Wenn diese Geräte auffällig genug und mit entsprechend großen Lichtquellen ausgestattet sein sollen, werden die Abmessungen derartiger Geräte relativ groß, und es müssen durchaus Gerätegrößen von 100 L x 30 H x 20 B cm³ in Betracht gezogen werden. Geräte dieser Größe, deren Gehäuse aus Kunststoff gebildet sind, sind bspw. nach der DE-PS 30 28 219 bekannt, wobei es sich jedoch um eine spezielle Warnlampe handelt, die aus zusammenfaltbaren Einzelgehäusen besteht und die aufgrund ihrer entsprechend kleineren Abmessungen in sich ausreichend stabil sind. Dies ändert sich bei Warnlichtgeräten mit Abmessungen der obengenannten Größe, für die extrem starke Kunststoffwandungen vorgesehen werden müßten, wenn man derart große Warnlichtgeräte mit geeigneten Halterungen an geeigneten Stellagen aufstellen oder an entsprechenden Halterungen von Fahrzeugen befestigen wollte. Solche Halterungen sind bspw. an Feuerwehrfahrzeugen per se vorhanden und zwar zur Anbringung oder Halterung besonderer Feuerwehrgerätschaften. Zu berücksichtigen ist bezüglich der Anbringung derartiger Warnlichtgeräte außerdem, daß diese nach Möglichkeit exponiert und bspw. von einem Feuerwehrfahrzeug zur Gefahrenseite hin herausragend angebracht werden sollen. Bei der Anbringung derartiger Warnlichtgeräte an geeigneten Gestellen, um bspw. per Blitzsequenz der im Gerät befindlichen Lampen eine Fahrspurverengung oder Fahrspuränderung anzuzeigen, ist zu berücksichtigen, daß für solche Aufstellungen eine relativ rauhe Handhabung zu erwarten ist, denen lediglich aus Kunststoff bestehende Gehäuse nicht allzu lange widerstehen würden.

Der Erfindung liegt demgemäß die Aufgabe zugrunde, ein Warnlichtgerät der eingangs genannten Art dahingehend zu verbessern, daß das eigentliche aus Kunststoff gebildete Gehäuse dünnwandig gehalten werden kann, dieses aber derart ausgesteift sein soll, daß es entsprechenden Belastungen widersteht und zwar mit der Maßgabe, daß die in die Halterung des Gehäuses eingehenden Belastungen weitestgehend vom Gehäuse ferngehalten werden und daß trotzdem das ganze Gerät einfach herzustellen, zusammenzumontieren und am Aufstellort einfach zu installieren sein soll.

Diese Aufgabe ist mit einem Warnlichtgerät der eingangs genannten Art nach der Erfindung durch die im Kennzeichen des Hauptanspruches angeführten Merkmale gelöst. Vorteilhafte Weiterbildungen ergeben sich nach den Unteransprüchen.

Durch die Einbindung eines metallischen Trägers in Form eines Rahmens oder bevorzugt in Form mindestens zweier sich kreuzender Hohlprofile, wobei der Träger mindestens an einer Stelle des Gehäuses als Befestigungselement zugänglich ist, hat das Gehäuse überhaupt keine Tragfunktion mehr, sondern diese wird vom eigentlichen Träger übernommen, an dem, da sich dieser innerhalb des Gehäuses befindet, die Lichtquellenfassungen mit der Stromzuführung angebracht werden können. Die Maßgabe, daß der metallische Träger zum Teil in Form mindestens eines Auf- oder Einsteckhalters als Befestigungselement die Gehäusewand durchgreifen soll, ist nicht so zu verstehen, daß dieses Teil des Trägers unbedingt aus dem Gehäuse herausragen muß, sondern notwendig ist nur, daß der betreffende Teil zumindest in der Nähe einer dazu fluchtenden Gehäusewand endet. Was den Gerätehalter betrifft, so wird eine Ausführungsform bevorzugt, bei der mindestens ein Teil des Trägers aus dem Gehäuse herausragt, was noch näher erläutert wird. Diese bevorzugte Ausführungsform bietet die Möglichkeit, das aus der Gehäusewand herausragende Teil des Trägers in Form eines feststellbaren Ein- oder Zweifachgelenkes auszubilden, wodurch ein Gerät, das bspw. nur an einer Seite einen herausragenden Gerätehalter hat, trotzdem in verschiedenen Stellungen an einem dafür geeigneten Aufnahmezapfen bspw. eines Feuerwehrfahrzeuges angebracht und eingestellt werden kann. Dabei kann das Ein- oder Zweifachgelenk durchaus als separates Bauteil ausgebildet sein, das mit dem Träger in Verbindung steht.

Das erfindungsgemäße Warnlichtgerät hat die Vorteile, daß es - im wesentlichen nur aus drei Teilen bestehend, nämlich Gehäuseoberteil, Gehäuseunterteil und zwischen diesen eingebundenen Träger - einfach herzustellen und zusammenzumontieren ist, daß der die Gesamtbelastung aufnehmende Träger, der das dünnwandige Gehäuse aussteift, gleichzeitig als Gerätehalter dient und daß je nach Ausbildung und Anordnung der Gerätehalteelemente, das Gerät in unterschiedlichen Stellungen am Aufstellplatz installiert werden kann.

Das Warnlichtgerät, vorteilhafte Weiterbildungen und praktische Ausführungsformen werden nachfolgend anhand der zeichnerischen Darstellung von Ausführungsbeispielen näher erläutert.

Es zeigt schematisch:

Fig. 1    perspektivisch das Warnlichtgerät in Vorderansicht;

Fig. 2    perspektivisch das Warnlichtgerät in Rückansicht;

Fig. 3    einen Teilschnitt durch eine Gehäusewand im Bereich der Endung eines Trägerprofiles;

Fig. 4    einen Teilschnitt durch das Gehäuse längs Linie IV-IV in Fig. 1;

Fig. 5    teilweise in Schnitt und Ansicht eine Ausführungsform des Trägers;

Fig. 6,7   in Ansicht besondere Ausführungsformen des Gerätehalters und

Fig. 8,9   Installationsbeispiele für das Warnlichtgerät.

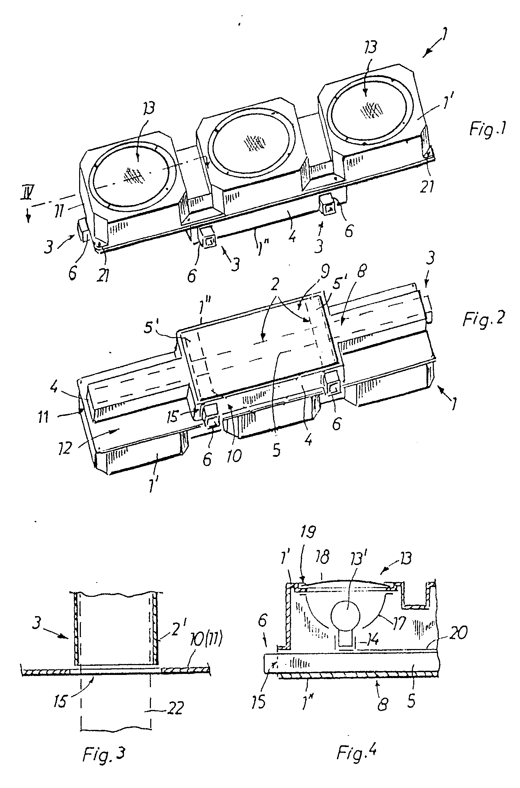

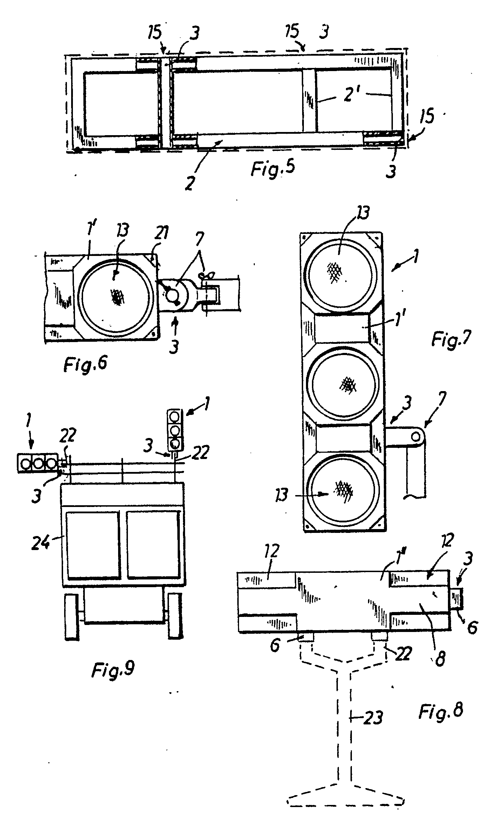

Wie insbesondere aus den Fig. 1, 2 erkennbar, besteht das Gerät aus einem Gehäuse 1 mit Gerätehaltern 3 und drei in Reihe nebeneinander angeordneten Lampen 13. Im aus Kunststoff gebildeten Gehäuse 1, das aus einem Oberteil 1' und einem Unterteil 1" besteht,ist ein aus Metallprofilen 5, vorzugsweise Metallhohlprofilen gebildeter Träger 2 angeordnet und zwar im Gehäuseunterteil 1". Abgesehen davon, daß dieser Träger 2 gemäß Fig. 5 auch als Rahmen 16 ausgebildet sein kann, ist dieser Träger 2,wie in Fig. 2 gestrichelt angedeutet, aus drei sich kreuzenden Hohlprofilen 5 gebildet, von denen jeweils ein Ende 6 je einen Gerätehalter bildend, die Gehäusewand 4 des Gehäuseunterteiles 1" durchgreift. Die Fassungen 14 für die Blitzlichter 13' und die Stromzuführung 20 sind dabei unmittelbar am Träger 2, wie aus Fig. 4 ersichtlich, befestigt. Um eine besonders stabile Einbindung des Trägers 2 in das Gehäuseunterteil 1" zu gewährleisten, ist vorteil haft die Gehäuserückwand 8 mit Profilierungen 12 versehen, wobei, wie aus Fig. 2 erkennbar, zwischen diesen Profilierungen entsprechende Teile des Trägers 2 verlaufend angeordnet sind. Sofern der Träger 2 nicht unmittelbar mit in den das Gehäuseunterteil 1" bildenden Kunststoff eingegossen bzw. eingespritzt ist, genügen einige Schraubverbindungen (nicht dargestellt), um eine ausreichend feste Verbindung zwischen Gehäuseunterteil 1" und Träger 2 herzustellen. Das Gehäuseoberteil 1', das mit entsprechenden Öffnungen für die Aufnahme der Lampen 13 versehen ist, ist zweckmäßig als Deckel dem Gehäuseunterteil 1" zugeordnet und wird einfach mit diesem an den Stellen 21 verschraubt. Wie ohne weiteres nach der Darstellung gemäß Fig. 1, 2 vorstellbar, kann ein solches Gerät auf einem entsprechenden Haltezapfen 22 eines Gestelles 23 (Fig. 8) oder eines Fahrzeuges 24 (Fig. 9) in senkrechter oder waagerechter Stellung aufgesteckt werden.

Diesbezüglich, d.h. bezüglich des bzw. der Gerätehalter 3 wird auf Fig. 3 - 5 Bezug genommen. Gemäß Fig. 3 müssen die Enden der Hohlprofilteile 2' die Öffnung 15 in den Wandungen 10 bzw. 11 des Gehäuseunterteiles 1" nicht durchgreifen, sondern es genügt, wenn diese fluchtend, wie dargestellt, vor den Öffnungen 15 enden, so daß das offene Ende auf einen Haltezapfen 22 aufgesteckt werden kann. Vorteilhafter durchgreifen die Profilenden in Form von drei seitlich aus dem Gehäuseunterteil 1" herausragenden Fortsätzen 6 die Öffnungen 15. Sofern es sich beim Träger 2 gemäß Fig. 5 um einen Rahmen 16 handelt, sind die Hohlprofilteile 2' des Rahmens 16, wie dargestellt, zusammengesetzt, so daß sich auch hierbei entsprechende Gerätehalter 3 im Sinne der Fig. 3 ergeben.

Wie aus Fig. 4 ersichtlich, ist der in das Gehäuseunterteil 1'eingebundene Träger 2 gleichzeitig ausgenutzt, um die Lichtquellenfassungen 14 und die Stomzuleitungen 20 zu befestigen, während die in bekannter Weise verspiegelten parabolischen Lampenschalen 17, wie dargestellt, zusammen mit den transparenten Lampenabdeckungen 18 an den Öffnungsrändern 19 des Gehäuseoberteiles 1' befestigt sind. Durch diese Ausbildung ist der Zusammenbau des Gerätes außerordentlich einfach, da der mit den Fassungen 14 und den Stromverteilungen 20 versehene Träger 2 einfach mit dem Gehäuseunterteil 1" verbunden und darauf das mit den Abdeckungen 18 und den Schalen 17 versehene Gehäuseoberteil 1' aufgesetzt und an den Stellen 21 verschraubt wird.

Insbesondere wenn nur ein Gerätehalter 3 vorgesehen ist, wird dieser, wie aus Fig. 6, 7 erkennbar, vorteilhaft als Ein- oder Zweifachgelenk 7 ausgebildet, um das Gerät entweder in senkrechter oder waagerechter Stellung positionieren zu können. Da nicht immer und überall an Fahrzeugen geeignete Haltezapfen vorhanden sind, kann das Gerät auf seiner Rückwand 8 mit einer Magnethaftplatte 9, wie aus Fig. 2, 8 ersichtlich, versehen sein, die entweder mit einer geeigneten Haftverbindung (Dauerkleber) ganzflächig tragend am Gehäuse unterteil 1" befestigt oder die durch die Rückwand 8 hindurch mit dem Träger 2 verschraubt ist.

Durch die beschriebene Ausbildung ist das Gerät nicht nur zur Anbringung an Fahrzeugen 24 (Fig. 9) geeignet, sondern kann auch, wie in Fig. 8 gestrichelt angedeutet, auf geeignete Gestelle 23 aufgesteckt und mit diesen Gestellen aufgestellt werden, um bspw. bei Querstellung eine Fahrspurverengung per einweisender Blitzlichtfolge anzuzeigen.

Für die Metallprofile 5 werden bevorzugt im Querschnitt quadratische Hohlprofile benutzt, da sich diese einerseits am günstigsten in das Gehäuse 1, wie beschrieben, einbinden lassen und zum anderen gewährleisten solche Profile an entsprechenden Haltern automatisch Verdrehsicherheit des Gerätes zum Halter.

## Ansprüche

1. Warnlichtgerät, insbesondere für Kraftfahrzeuge, bestehend aus einem Kunststoffgehäuse mit Gehäuseaussteifungselementen und mehreren in Reihe nebeneinander im Gehäuse angeordneten Lampen, **dadurch gekennzeichnet,** daß die Aussteifungselemente im aus Oberteil (1') und Unterteil (1") gebildeten Gehäuse (1) im Bereich der rückwärtigen Gehäusewandung (8) in Form eines aus Metallprofilen (5) gebildeten Trägers (2) angeordnet sind, daß im Bereich einer Seiten- und/oder Stirnwand (10, 11) des Gehäuses(1) fluchtend zum Träger (2) mindestens eine in bezug auf den Profilquerschnitt des Trägers (2) etwas größere Durchgriffsöffnung (15) angeordnet und daß der Träger (2) im Bereich der Durchgriffsöffnung (15) in Form eines Gerätehalters (3) ausgebildet ist.

2. Warnlichtgerät nach Anspruch 1, **dadurch gekennzeichnet,** daß die Metallprofile (5) des Trägers (2) aus Hohlprofilen gebildet sind.

3. Warnlichtgerät nach Anspruch 1 oder 2, **dadurch gekennzeichnet,** daß der Gerätehalter (3) in Form eines die Durchgriffsöffnung (15) durchgreifenden Profilfortsatz (6) des Trägers (2) ausgebildet ist.

4. Warnlichtgerät nach Anspruch 1 und 2, **dadurch gekennzeichnet,** daß der Gerätehalter (3) in Form eines fluchtend zur Durchgriffsöffnung (15) angeordneten Hohlprofilteiles (2') des Trägers (2) ausgebildet ist.

5. Warnlichtgerät nach einem der Ansprüche 1 bis 4, **dadurch gekennzeichnet,** daß der Träger (2) in Form eines der Gehäuseform angepaßten Rahmens (16) oder aus einem sich längs im Gehäuse (1) erstreckenden und mindestens einem sich quer dazu erstreckenden Profil (5, 5') gebildet ist.

6. Warnlichtgerät nach einem der Ansprüche 1 bis 5, **dadurch gekennzeichnet,** daß die mindestens eine Durchgriffsöffnung (15) im Gehäuseunterteil (1") angeordnet ist.

7. Warnlichtgerät nach einem der Ansprüche 2, 4, 5 oder 6, **dadurch gekennzeichnet,** daß der mindestens eine die Gehäusewand (4) durchgreifende Profilfortsatz (6) mit einem feststellbaren Ein- oder Zweifachgelenkes (7) versehen ist.

8. Warnlichtgerät nach einem dar Ansprüche 1 bis 7, **dadurch gekennzeichnet,** daß an der Rückwand (8) des Gehäuseunterteiles (1"), diese mindestens teilweise abdeckend, eine Magnethaftplatte (9) angeordnet ist.

9. Warnlichtgerät nach einem der Ansprüche 1 bis 8, **dadurch gekennzeichnet,** daß die Rückwand (8) des Gehäuseunterteiles (1") mit Profilierungen (12) versehen ist und in diesen Profilierungen (12) die Profile des Trägers (2) verlaufend angeordnet sind.

10. Warnlichtgerät nach einem der Ansprüche 1 bis 9, **dadurch gekennzeichnet,** daß die Lichtquellenfassungen (14) der Lampen (13) und deren Stromzuleitungen (20) am Träger (2) und die Lampenschalen (17) mit den transparenten Lampenabdeckungen (18) an Öffnungsrändern (19) des Gehäuseoberteiles (1') befestigt sind.

## Claims

1. A warning light device of the type particularly suitable for automotive vehicles, composed of a plastics housing including housing reinforcement elements and a plural number of lights series-arranged in side-by-side relationship in the housing, characterized in that the reinforcement elements are located in the housing (1) formed of upper section (1') and lower section (1"), in the area of the rearward housing wall (8), in the form of a carrier (2) formed of metal profiles (5), that arranged in the area of a side wall or a front wall (10,11) of the housing (1), in alignment with the carrier (2), is at least one passage opening (15) slightly larger than the profile cross-section of the carrier (2), and that the carrier (2), in the area of the passage opening (15), is in the form of a device holder (3).

2. A warning light device according to claim 1, characterized in that the metal profiles (5) of the carrier (2) are hollow profiles.

3. A warning light device according to claims 1 or 2, characterized in that the device holder (3) is in the form of a profile extension (6) of the carrier (2) passing through the passage opening (15).

4. A warning light device according to claims 1 and 2, characterized in that the device holder (3) is in the form of a hollow profile section (2') of the carrier (2) arranged in alignment with the passage opening (15).

5. A warning light device according to claims 1 to 4, characterized in that the carrier (2) is in the form of a frame (16) conforming to the shape of the housing, or of a profile (5,5') longitudinally extending within the housing (1), and at least one profile extending in a direction transverse thereto.

6. A warning light device according to any one of claims 1 to 5, characterized in that the at least one passage opening (15) is located in the housing bottom section (1").

7. A warning light device according to any one of claims 2,4,5 or 6, characterized in that the at least one profile extension (8) passing through the housing wall (4) is provided with a lockable single or dual joint (7).

8. A warning light device according to any one of claims 1 to 7, characterized in that a magnetic holding plate (9) is provided on the rear wall (8) of the housing bottom section (1"), masking the same at least in part.

9. A warning light device according to any one of claims 1 to 8, characterized in that the rear wall (8) of the housing bottom section (1") is provided with profilings (12), and that the profiles of carrier (2) are located in a manner extending in the said profilings (12).

10. A warning light device according to any one of claims 1 to 9, characterized in that the light source sockets (14) of the lights (13) and the current feed lines (20) thereof are fixed to carrier (2) and the lamp bowls (17) with the transparent light masks (18) are fixed to opening edges (19) of the housing upper section (1').

**Revendications**

1. Appareil à signal avertisseur lumineux, en particulier pour véhicules automobiles, se composent d'un bâti en matière plastique avec des éléments de renforcement pour le bâti et avec plusieurs lampes placées dans le bâti en rangée l'une à côté de l'autre, caractérisé en ce que les éléments de renforcement sont placés dans le bâti (1) formé par une partie supérieure (1') et une partie inférieure (1") dans la zone de la paroi arrière (8) du bâti en ayant la forme d'un support (2) formé par des profils métalliques (5), qu'au moins une ouverture de pénétration (15), qui est un peu plus grande que la section du profil du support (2), est ménagée dans la zone d'une paroi latérale et/ou de face (10,11) du bâti (1) en étant alignée sur le support (2) et que le support (2) est configuré en forme de support d'appareil (3) dans la zone de l'ouverture de pénétration (15).

2. Appareil à signal avertisseur lumineux selon la revendication 1, caractérisé en ce que les profils métalliques (5) du support (2) sont formés par des profils creux.

3. Appareil à signal avertisseur lumineux selon la revendication 1 ou 2, caractérisé en ce que le support d'appareil (3) est configuré en ayant la forme d'une prolongation de profil (6) du support (2) qui pénètre l'ouverture de pénétration (15).

4. Appareil à signal avertisseur lumineux selon les revendications 1 et 2, caractérisé en ce que le support d'appareil (3) est configuré en ayant la forme d'une partie de profil creux (2') du support (2) qui est placée en étant alignée sur l'ouverture de pénétration (15).

5. Appareil à signal avertisseur lumineux selon l'une des revendications 1 à 4, caractérisé en ce que le support (2) est formé en forme de cadre (16) adapté à la forme du bâti ou par un profil qui s'étend longitudinalement dans le bâti (1) et par au moins un profil (5, 5') qui s'étend transversalement par rapport à celui-ci.

6. Appareil à signal avertisseur lumineux selon l'une des revendications 1 à 5, caractérisé en ce qu'au moins une ouverture de pénétration (15) est disposée dans la partie inférieure (1") du bâti.

7. Appareil à signal avertisseur lumineux selon l'une des revendications 2, 4, 5 ou 6, caractérisé en ce que la prolongation de profil (6) qui pénètre au moins une paroi de bâti (4) est équipée d'une articulation simple ou double (7) qui peut être bloquée.

8. Appareil à signal avertisseur lumineux selon l'une des revendications 1 à 7,m caractérisé en ce qu'une plaque adhérente magnétique (9) est placée sur la paroi arrière (8) de la partie inférieure (1") du bâti en recouvrant cette paroi au moins partiellement.

9. Appareil à signal avertisseur lumineux selon l'une des revendications 1 à 8, caractérisé en ce que la paroi arrière (8) de la partie inférieure (1") du bâti est équipée de profilages (12) et que les profils du support (2) sont placés dans ces profilages (12).

10. Appareil à signal avertisseur lumineux selon l'une des revendications 1 à 9, caractérisé en ce que les douilles (14) des sources de lumière des lampes (13) et leurs conduites d'alimentation en courant (20) sont fixées sur le support (2) et les coupes des lampes (17) avec les couvercles transparents des lampes (18) sont fixées sur les bords d'ouverture (19) de la partie supérieure (I') du bâti.

Fig.1

Fig.2

Fig.3

Fig.4

7

Fig.5

Fig.6

Fig.7

Fig.9

Fig.8